# EUROPÄISCHE PATENTANMELDUNG

(11) **EP 2 860 846 A1**
(43) Veröffentlichungstag der Anmeldung: **15.04.2015**
(21) Anmeldenummer: 14179267.1
(22) Anmeldetag: 31.07.2014
(51) Int. Cl.: H02J 13/00, H04L 12/28

(54) **Elektrisches/elektronisches Steuermodul**

(30) Priorität: 08.10.2013 DE 102013111095
(71) Anmelder: Insta Elektro GmbH, 58509 Lüdenscheid (DE)
(72) Erfinder: Melnik, Andrew, 44225 Dortmund (DE)

(57) **Zusammenfassung**

Es wird ein elektrisches/elektronisches Steuermodul zur bedarfsgerechten Beeinflussung von in Gebäuden installierten Aktoren vorgeschlagen, wobei das Steuermodul mit einer Logikeinheit (1) zur Verarbeitung und Aufbereitung von Steuerinformationen versehen ist und wobei die Logikeinheit datentechnisch einerseits mit zumindest einer Bedieneinheit (2) und datentechnisch andererseits mit zumindest einem Kommunikationsmodul (3) in Verbindung steht. Zu dem Zweck, ein elektrisches/elektronisches Steuermodul zu schaffen, welches zum Zweck der bedarfsgerechten Ansteuerung von Aktoren (A) die Möglichkeit bietet, die dazu notwendigen Steuerinformationen (Steuerprogramm) auf einfache Art und Weise durch eine Aktualisierung, Ergänzung oder einen Austausch an neue Anforderungen anzupassen, weist die Logikeinheit einen Speicher (4) zur veränderbaren Speicherung von aktorspezifischen Steuerinformationen auf, welcher über eine Aktualisierungsstufe mit zumindest einem Kommunikationsmodul in Verbindung steht.

## Beschreibung

Die vorliegende Erfindung geht von einem gemäß Oberbegriff des Hauptanspruches konzipierten elektrischen/elektronischen Steuermodul aus.

Derartige Steuermodule sind in der Regel dafür vorgesehen, eine Vielzahl von in Gebäuden installierte elektrische Aktoren (Jalousieantriebe, Beleuchtungseinrichtungen, Fühler, Wächter usw.) bedarfsgerecht zu beeinflussen. Zu diesem Zweck sind die unterschiedlichsten Steuermodule wie Schalter, Taster, Dimmer usw. bekannt geworden, wobei die Betätigung der zugehörigen Betätigungseinheit zum Beispiel durch eine Drehbetätigung, Tastbetätigung, Wischbetätigung und so weiter erfolgen kann. Es finden sowohl bildschirmgeführte Betätigungseinheiten, als auch Betätigungseinheiten mit manuellen Betätigungselementen (Drehsteller, Drucktasten, Wipptasten und so weiter) Verwendung. Zur Beeinflussung werden üblicherweise vom Benutzer an den Bedienelementen bzw. der Bedieneinheit Bediengrößen (Steuerinformationen) eingestellt, die an die zugeordneten Aktoren zu deren bedarfsgerechten Beeinflussung übertragen werden. Die Übertragung kann drahtgebunden oder aber drahtlos z. B. per Funk erfolgen.

Durch die DE 10 2010 037 200 B4 und die DE 10 2012 101 808 B3 sind jeweils dem Oberbegriff des Hauptanspruches entsprechende elektrische/elektronische Steuermodule bekannt geworden. Diese Steuermodule sind zur bedarfsgerechten Beeinflussung von in Gebäuden installierten Aktoren vorgesehen. Die Steuermodule sind mit einer Logikeinheit zur Verarbeitung und Aufbereitung von Steuerinformationen versehen, wobei die Logikeinheit datentechnisch einerseits mit zumindest einer Bedieneinheit und datentechnisch andererseits mit zumindest einem Kommunikationsmodul in Verbindung steht. Bei diesen Steuermodulen besteht die Problematik, dass die in der Logikeinheit abgelegten, zur bedarfsgerechten Beeinflussung der anzusteuernden Aktoren vorgesehenen Steuerinformationen fest eingegeben sind, also nachträglich nicht ausgetauscht oder durch ein Update aktualisiert werden können. Heutzutage unterliegen die zur Verwendung in Gebäuden vorgesehenen Aktoren jedoch einer hohen Änderungsgeschwindigkeit, was dazu führen kann, dass bereits in den Markt gelieferte und/oder zukünftig in den Markt zu liefernde Aktoren mittels bereits installierter Steuermodule nicht mehr oder zumindest nicht mehr optimal beeinflusst werden können. Das ist der Fall, weil die in der Logikeinheit der Steuermodule vorhandenen Steuerinformationen (Steuerprogramm) zur Beeinflussung der Aktoren den gestellten Anforderungen nicht mehr gerecht werden. Insbesondere bei Aktoren (Leuchten), die über Dimmer zu beeinflussen sind, ist zu beobachten, dass diese immer schneller umfangreich überarbeitet oder aber mit neuartigen Leuchtmitteln bestückt werden, was zu der vorbeschriebenen Problematik hinsichtlich einer bedarfsgerechten Ansteuerung führt. Oftmals muss dann das gesamte Steuermodul ausgetauscht werden, damit die im Gebäude verbauten Aktoren wieder bedarfsgerecht beeinflusst werden können, was mit einem erheblichen montagetechnischen Aufwand und entsprechend hohen Kosten verbunden ist.

Ausgehend von derart ausgebildeten elektrischen/elektronischen Steuermodulen liegt der vorliegenden Erfindung die Aufgabe zugrunde, ein elektrisches/elektronisches Steuermodul zu schaffen, welches zum Zweck der bedarfsgerechten Ansteuerung von Aktoren die Möglichkeit bietet, die dazu notwendigen Steuerinformationen (Steuerprogramm) auf einfache Art und Weise durch eine Aktualisierung, Ergänzung oder einen Austausch an neue Anforderungen anzupassen.

Erfindungsgemäß wird diese Aufgabe durch die im Hauptanspruch angegebenen Merkmale gelöst.

Bei einer solchen Ausbildung ist besonders vorteilhaft, dass zur bedarfsgerechten Ansteuerung von neuartige Anforderungen stellenden Aktoren lediglich ein Update oder ein Austausch der in der Logikeinheit abgelegten Steuerinformationen (Steuerprogramm) durchzuführen ist, was mittels moderner, mit dem Internet verbindbarer Steuergeräte, wie zum Beispiel Smartphones, Fernbedienungen, Router und so weiter durch Laden eines aktuellen Applikationsprogrammes (App) erfolgen kann.

Weitere vorteilhafte Ausgestaltungen des erfindungsgemäßen Gegenstandes sind in den Unteransprüchen angegeben. Anhand eines Ausführungsbeispieles sei die Erfindung im Prinzip näher erläutert. Dabei zeigen:

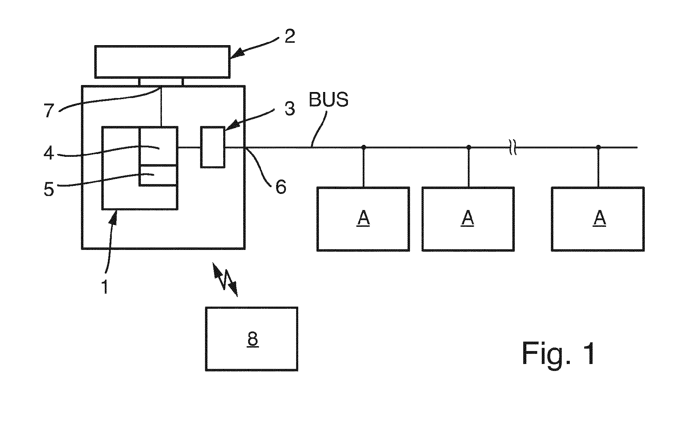

- Fig. 1:: prinziphaft ein mit einer Bedieneinheit ausgerüstetes und an ein Bussystem angeschlossenes elektrisches/elektronisches Steuermodul als Blockschaltbild.

Wie aus der Zeichnung hervorgeht, besteht ein derartiges elektrisches/elektronisches Steuermodul zur bedarfsgerechten Beeinflussung von in Gebäuden installierten Aktoren A, hauptsächlich aus einer Logikeinheit 1 zur Verarbeitung und Aufbereitung von Steuerinformationen, wobei die Logikeinheit 1 datentechnisch einerseits mit zumindest einer Bedieneinheit 2 und datentechnisch andererseits mit zumindest einem Kommunikationsmodul 3 in Verbindung steht. Die Logikeinheit 1 weist einen Speicher 4 zur veränderbaren Speicherung von aktorspezifischen Steuerinformationen auf, wobei der Speicher 4 über eine Aktualisierungsstufe 5 mit zumindest dem Kommunikationsmodul 3 in Verbindung steht.

Wie des Weiteren aus der Zeichnung hervorgeht, steht die Logikeinheit 1 einerseits über eine erste Schnittstelle 6 mit dem Bussystem BUS in Verbindung, an welches auch die Aktoren A angeschlossen sind. Beim vorliegenden Ausführungsbeispiel handelt es sich um ein drahtgebundenes Bussystem BUS. Andererseits steht die Logikeinheit 1 über eine zweite Schnittstelle 7 mit der Bedieneinheit 2 in Verbindung, welche beim vorliegenden Ausführungsbeispiel als, mit einem Touchscreen ausgerüstetes, Applikationsmodul ausgeführt ist, welches auf ein Grundgerät aufgesteckt wird. Beim vorliegenden Ausführungsbeispiel besteht das elektrische/elektronische Steuermodul also aus einem separaten Busmodul und aus einem separaten Anwendungsmodul. Die zwischen dem Busmodul und dem Anwendungsmodul vorhandene zweite Schnittstelle 7 ist beim vorliegenden Ausführungsbeispiel als mehrpolige Steckverbindung ausgeführt. Über den Touchscreen des Anwendungsmoduls lassen sich die Aktoren A auf vielfältige Art und Weise komfortabel beeinflussen. Beim vorliegenden Ausführungsbeispiel ist unter anderem auch die Funktionalität eines Dimmers vorgesehen, um die als Leuchten ausgeführten Aktoren A bedarfsgerecht beeinflussen zu können. Genauso gut kann das elektrische/elektronische Steuermodul als Kompaktgerät ausgeführt sein, was bedeutet, dass die Bedieneinheit 2 Bestandteil des elektrischen/elektronischen Steuermoduls ist. Bei einem solchen Kompaktgerät (Steuermodul) kann es sich zum Beispiel um einen mit manuellem Drehsteller ausgerüsteten Dimmer handeln, welcher über ein im Steuermodul vorhandenes Leistungsteil die angeschlossenen Aktoren A direkt bedarfsgerecht beeinflusst.

Die Logikeinheit 1 weist einen Microcontroller auf und steht über ihr Kommunikationsmodul 3 funktechnisch mit einem mobilen Steuergerät 8 in Verbindung. Das mobile Steuergerät 8 stellt eine zweite Bedieneinheit dar, die zum Beispiel als mit dem Internet verbindbares Smartphone, verbindbare Fernbedienung und so weiter ausgeführt sein kann. Beim vorliegenden Ausführungsbeispiel ist das mobile Steuergerät 8 als Smartphone ausgeführt, welches über Bluetooth-Funktionalitäten eine Verbindung zum Kommunikationsmodul 3 der Logikeinheit 1 aufbaut. Über die Bedienoberfläche des als Smartphone ausgeführten Steuergerätes 8 wird bedarfsgerecht eine komfortable Beeinflussung der an das Bussystem BUS angeschlossenen Aktoren A ermöglicht. Zudem besteht die Möglichkeit, im Bedarfsfalle über das als Smartphone ausgeführte Steuergerät 8 zum Zweck der bedarfsgerechten Ansteuerung der an das Bussystem BUS angeschlossenen Aktoren A die dazu notwendigen Steuerinformationen (Steuerprogramm) auf einfache Art und Weise durch eine Aktualisierung und/oder Ergänzung oder einen Austausch an neue Anforderungen anzupassen. Damit ist es auf einfache Art und Weise möglich, Leuchten bedarfsgerecht zu beeinflussen, die zum Beispiel mit als Leuchtdioden, Kompaktleuchtstofflampen, Halogenlampen oder Glühlampen ausgeführten Leuchtmitteln ausgerüstet sind. Auch ist es somit möglich, Aktoren A über das Bussystem BUS bedarfsgerecht zu betreiben, welche als Leuchten ausgeführt und mit unterschiedlichen Leuchtmitteln (Leuchtdioden, Kompaktleuchtstofflampen, Halogenlampen oder Glühlampen) ausgerüstet sind. Zudem ist es möglich, bedarfsgerecht auf einen nachträglichen Austausch von Leuchtmitteln oder Leuchten mit neuartigen bzw. andersartigen Anforderungen hinsichtlich ihrer bedarfsgerechten Ansteuerung zu reagieren. Gleiches gilt beim Anschluss weiterer, als Leuchten ausgebildeter Aktoren A, die zur Ergänzung der bereits an das Bussystem BUS angeschlossenen Aktoren A dienen.

Bei dem vorliegenden Gegenstand ist besonders vorteilhaft, dass zur bedarfsgerechten Ansteuerung von neuartige Anforderungen stellenden Aktoren A lediglich ein Update oder ein Austausch der in der Logikeinheit 1 abgelegten Steuerinformationen (Steuerprogramm) durchzuführen ist, was mittels des als Smartphone ausgeführten Steuergerätes 8 besonders einfach zu bewerkstelligen ist. Auch ist es möglich, zu diesem Zweck andere moderne mit dem Internet verbindbarer Steuergeräte, wie zum Beispiel Fernbedienungen, Router und so weiter heranzuziehen, um durch Laden eines aktuellen Applikationsprogrammes (App) in die Logikeinheit 1 auf einfache Art und Weise eine Anpassung an neue, durch die an das Bussystem BUS angeschlossenen Aktoren A hervorgerufenen, Anforderungen vorzunehmen. Auf diese Art und Weise kann auch bei der Inbetriebnahme einer an das Bussystem BUS angeschlossenen Beleuchtungsanlage mit mehreren, als Leuchten ausgebildeten Aktoren A auf einfache Art und Weise eine Einlernunterstützung zur Verfügung gestellt werden. Dies kann dadurch geschehen, dass zum Beispiel eine spezielle Inbetriebnahme-App in den Speicher 4 der Logikeinheit 1 geladen wird.

### Bezugszeichenliste:

- 1.: Logikeinheit
- 2.: Bedieneinheit
- 3.: Kommunikationsmodul
- 4.: Speicher
- 5.: Aktualisierungsstufe
- 6.: Erste Schnittstelle
- 7.: Zweite Schnittstelle
- 8.: Mobiles Steuergerät

- A: Aktoren
- BUS: Bussystem

## Patentansprüche

1. Elektrisches/elektronisches Steuermodul zur bedarfsgerechten Beeinflussung von in Gebäuden installierten Aktoren, welches mit einer Logikeinheit zur Verarbeitung und Aufbereitung von Steuerinformationen versehen ist, wobei die Logikeinheit datentechnisch einerseits mit zumindest einer Bedieneinheit und datentechnisch andererseits mit zumindest einem Kommunikationsmodul in Verbindung steht, **dadurch gekennzeichnet, dass** die Logikeinheit (1) einen Speicher (4) zur veränderbaren Speicherung von aktorspezifischen Steuerinformationen aufweist, welcher über eine Aktualisierungsstufe (5) mit zumindest einem Kommunikationsmodul (3) in Verbindung steht.

2. Elektrisches/elektronisches Steuermodul nach Anspruch 1, **dadurch gekennzeichnet, dass** die Logikeinheit (1) über eine erste Schnittstelle (6) mit zumindest einem Bussystem (BUS) in Verbindung steht.

3. Elektrisches/elektronisches Steuermodul nach Anspruch 1 oder 2, **dadurch gekennzeichnet, dass** die Logikeinheit (1) über eine zweite Schnittstelle (7) mit zumindest einer Bedieneinheit (2) in Verbindung steht.

4. Elektrisches/elektronisches Steuermodul nach einem der Ansprüche 1 bis 3, **dadurch gekennzeichnet, dass** die Logikeinheit (1) zumindest einen Microcontroller aufweist.

5. Elektrisches/elektronisches Steuermodul nach einem der Ansprüche 1 bis 4, **dadurch gekennzeichnet, dass** das mit der Logikeinheit (1) in Verbindung stehende Kommunikationsmodul (3) zur funktechnischen Verbindung mit zumindest einem mobilen Steuergerät (8) vorgesehen ist.

6. Elektrische/elektronisches Steuermodul nach einem der Ansprüche 1 bis 5, **dadurch gekennzeichnet, dass** das mit der Logikeinheit (1) in Verbindung stehende Kommunikationsmodul (3) zur funktechnischen Verbindung WLAN-Funktionalitäten aufweist.

7. Elektrisches/elektronisches Steuermodul nach einem der Ansprüche 1 bis 5, **dadurch gekennzeichnet, dass** das mit der Logikeinheit (1) in Verbindung stehende Kommunikationsmodul (3) zur funktechnischen Verbindung Bluetooth-Funktionalitäten aufweist.

8. Elektrisches/elektronisches Steuermodul nach einem der Ansprüche 1 bis 5, **dadurch gekennzeichnet, dass** das mit der Logikeinheit (1) in Verbindung stehende Kommunikationsmodul (3) zur funktechnischen Verbindung ZigBee-Funktionalitäten aufweist.

9. Elektrisches/elektronisches Steuermodul nach einem der Ansprüche 1 bis 8, **dadurch gekennzeichnet, dass** die Logikeinheit (1) zum Anschluss eines von außen zuzuführenden Speichermediums vorgesehen ist.

10. Elektrisches/elektronisches Steuermodul nach einem der Ansprüche 1 bis 9, **dadurch gekennzeichnet, dass** eine Aufteilung in ein separates Busmodul und ein separates Anwendungsmodul vorgesehen ist.

11. Elektrisches/elektronisches Steuermodul nach einem der Ansprüche 1 bis 9, **dadurch gekennzeichnet, dass** das Steuermodul als, mit zumindest einem manuellen Bedienelement ausgerüstetes, Kompaktgerät ausgebildet ist.

12. Elektrische/elektronisches Steuermodul nach einem der Ansprüche 1 bis 11, **dadurch gekennzeichnet, dass** das Steuermodul ein Leistungsteil aufweist und als Dimmer ausgeführt ist.

13. Elektrische/elektronisches Steuermodul nach einem der Ansprüche 1 bis 12, **dadurch gekennzeichnet, dass** zumindest ein zu beeinflussender Aktor (A) als mit Leuchtmitteln bestückte Leuchte ausgeführt ist.

14. Elektrisches/elektronisches Steuermodul nach einem der Ansprüche 1 bis 13, **dadurch gekennzeichnet, dass** ein Betrieb in einem zumindest teilweise drahtgebundenen Bussystem (BUS) vorgesehen ist.

15. Elektrisches/elektronisches Steuermodul nach einem der Ansprüche 1 bis 14, **dadurch gekennzeichnet, dass** ein Betrieb in einem zumindest teilweise funkbasierten Bussystem vorgesehen ist.

## Geänderte Patentansprüche

### Geänderte Patentansprüche gemäss Regel 137(2) EPÜ.

1. Elektrisches/elektronisches Steuermodul, ausgerüstet mit zumindest einer Bedieneinheit (2) zur bedarfsgerechten Beeinflussung von in Gebäuden installierten Aktoren (A), welches mit einer Logikeinheit (1) zur Verarbeitung und Aufbereitung von Steuerinformationen versehen ist, wobei die Logikeinheit (1) datentechnisch einerseits mit der zumindest einen Bedieneinheit (2) und datentechnisch andererseits mit zumindest einem Kommunikationsmodul (3) in Verbindung steht, wobei die Logikeinheit (1) einen Speicher (4) aufweist, welcher über eine Aktualisierungsstufe (5) mit dem zumindest einem Kommunikationsmodul (3) in Verbindung steht, und dass die Logikeinheit (1) über eine erste Schnittstelle (6) mit zumindest einem Bussystem (BUS) in Verbindung steht, an welches auch zu beeinflussende Aktoren (A) angeschlossen sind, und dass die Logikeinheit (1) über eine zweite Schnittstelle (7) mit der zumindest einen Bedieneinheit (2) in Verbindung steht, **dadurch gekennzeichnet, dass** der Speicher (4) zur veränderbaren Speicherung von aktorspezifischen Steuerinformationen vorgesehen ist, und dass das mit der Logikeinheit (1) in Verbindung stehende Kommunikationsmodul (3) zur Aktualisierung und/oder Ergänzung oder zum Austausch von aktorspezifischen Steuerinformation funktechnisch mit zumindest einem mobilen Steuergerät (8) in Verbindung steht.

2. Elektrisches/elektronisches Steuermodul nach Anspruch 1, **dadurch gekennzeichnet, dass** die Logikeinheit (1) zumindest einen Microcontroller aufweist.

3. Elektrische/elektronisches Steuermodul nach einem der Ansprüche 1 oder 2, **dadurch gekennzeichnet, dass** das mit der Logikeinheit (1) in Verbindung stehende Kommunikationsmodul (3) zur funktechnischen Verbindung WLAN-Funktionalitäten aufweist.

4. Elektrisches/elektronisches Steuermodul nach einem der Ansprüche 1 oder 2, **dadurch gekennzeichnet, dass** das mit der Logikeinheit (1) in Verbindung stehende Kommunikationsmodul (3) zur funktechnischen Verbindung Bluetooth-Funktionalitäten aufweist.

5. Elektrisches/elektronisches Steuermodul nach einem der Ansprüche 1 oder 2, **dadurch gekennzeichnet, dass** das mit der Logikeinheit (1) in Verbindung stehende Kommunikationsmodul (3) zur funktechnischen Verbindung ZigBee-Funktionalitäten aufweist.

6. Elektrisches/elektronisches Steuermodul nach einem der Ansprüche 1 bis 5, **dadurch gekennzeichnet, dass** die Logikeinheit (1) zum Anschluss eines von außen zuzuführenden Speichermediums vorgesehen ist.

7. Elektrisches/elektronisches Steuermodul nach einem der Ansprüche 1 bis 6, **dadurch gekennzeichnet, dass** eine Aufteilung in ein separates Busmodul und ein separates Anwendungsmodul vorgesehen ist.

8. Elektrisches/elektronisches Steuermodul nach einem der Ansprüche 1 bis 6, **dadurch gekennzeichnet, dass** das Steuermodul als, mit zumindest einem manuellen Bedienelement ausgerüstetes, Kompaktgerät ausgebildet ist.

9. Elektrische/elektronisches Steuermodul nach einem der Ansprüche 1 bis 8, **dadurch gekennzeichnet, dass** das Steuermodul ein Leistungsteil aufweist und als Dimmer ausgeführt ist.

10. Elektrische/elektronisches Steuermodul nach einem der Ansprüche 1 bis 9, **dadurch gekennzeichnet, dass** zumindest ein zu beeinflussender Aktor (A) als mit Leuchtmitteln bestückte Leuchte ausgeführt ist.

11. Elektrisches/elektronisches Steuermodul nach einem der Ansprüche 1 bis 10, **dadurch gekennzeichnet, dass** ein Betrieb in einem zumindest teilweise drahtgebundenen Bussystem (BUS) vorgesehen ist.

12. Elektrisches/elektronisches Steuermodul nach einem der Ansprüche 1 bis 11, **dadurch gekennzeichnet, dass** ein Betrieb in einem zumindest teilweise funkbasierten Bussystem vorgesehen ist.
